# EUROPEAN PATENT APPLICATION

(11) **EP 1 131 991 A1**
(43) Date of publication of application: **12.09.2001**
(21) Application number: 01300284.5
(22) Date of filing: 15.01.2001
(51) Int. Cl.: A01C 3/06

(54) **A material spreader**

(30) Priority: 02.02.2000 GB 0002232
(71) Applicant: HARRY WEST (PREES) LIMITED, Whitchurch Shropshire, SY13 2BT (GB)
(72) Inventor: The designation of the inventor has not yet been filed
(74) Representative: Croston, David

(57) **Abstract**

A material spreader 10 comprises a container 12 carried by a chassis. A conveyor assembly 40 arranged at the rear of the container 12 carries a series of cutting blades 50. The conveyor 40 acts to cut off portions of material in the store. Spreaders in the form of two spreading rotors 58, 60 are arranged separately from the conveyor 40 to spread the material. In another aspect, a first conveyor assembly 26 urges material in the container 12 towards a second conveyor assembly 40 which carries cutting blades 50. The conveyors are arranged transverse to each other whereby the second conveyor acts to cut material in the container 12. In a third aspect of the invention the cutting conveyor 40 is movable towards and away from an opening in the container, which the conveyor 40 closes off.

## Description

The invention relates to a material spreader and particularly although not exclusively limited to a machine for spreading fibrous material such as manure on farm land.

Changing trends in agricultural methods and environmental regulation has given rise to the need to spread manure with a high long straw content directly from the livestock housing onto the land. The rate of decomposition of the manure and consequently the rate of nutrient impute into the soil is greatly increased if the long straw manure is first chopped or shredded before it is spread. Known fibrous material spreaders generally comprise a store for the fibrous material, such as manure and chopping and spreading assembly arranged at one end of the store with means within the store to urge the material in the store towards the chopping and spreading assembly. The chopping and spreading assembly generally comprises two large rotors which rotate about respective spaced apart horizontal or vertical axes. The rotors are arranged adjacent to an opening in the store where material emerges from the store having been urged by an appropriate arrangement within the store. The rotors generally comprise several radial vanes arranged regularly around the axis thereof. The vanes of the two rotors and the spacing of the shafts of the rotors are selected so that respective vanes on each rotor cooperate to cut material as it is urged out of the opening of the store and then subsequent rotation of the rotors causes the vanes to throw the cut material away from the store.

It is an object of the invention to provide an improved form of material spreader.

Accordingly to a first aspect of the invention there is provided a material spreader comprising a store for material to be spread, cutting means for cutting portions of material comprising a conveyor carrying cutting elements and separate spreading means for spreading the cut portions of material.

In that way, the actions of cutting the portions of fibrous material and spreading the cut portions are performed separately and optimally by separate cutting means and spreading means.

The spreader preferably comprises urging means for urging the material in the store towards the cutting means. The urging means preferably comprises a conveyor for conveying the material in the store towards the cutting means. In each case, the cutting means preferably comprises a second conveyor carrying cutting elements, the second conveyor being arranged transverse relative to the first conveyor.

According to a second aspect of the invention there is provided a material spreader comprising a store for material to be spread, cutting means for cutting portions of the material, a first conveyor for conveying the material in the store towards the cutting means, the cutting means comprising a second conveyor carrying cutting elements, the second conveyor being arranged transverse relative to the first conveyor.

Preferably, the first and second conveyors are arranged so as to delimit an acute angle therebetween. Most preferably, the angle between the first and second conveyors is approximately 75°. The angle of 75° between the first and second conveyors allows the second conveyor to contribute to the conveying of material in the store towards the spreader. The material spreader according to the second aspect may include separate spreading means for spreading the cut fibrous material. The spreading means preferably comprises two rotors which are driveable in rotation, the rotors having radial vanes to propel cut material dropped onto the respective rotor.

The rotors are preferably rotatable about spaced parallel axes. The axes preferably lie approximately parallel with the aforesaid second conveyor.

Most preferably, the first conveyor is arranged along the floor of the store. The axes of the rotors of the spreader and the conveyor on the floor of the store preferably delimit an angle of 75°. In that way material dropping from the store onto the rotors is propelled with a partly upward component which increases the range of travel of the cut material and therefore the area covered by the spreader.

The cutting means is preferably mounted so as to be moveable towards and away from the opening from which material to be spread emerges.

In that way, if a foreign object should be found within the material to be spread, when that object contacts the cutting means it will push the cutting means away from the opening rather than, in the case of substantial objects, damaging the spreader mechanism.

According to a third aspect of the invention there is provided a material spreader comprising a store for material to be spread, the store having an opening to allow material from the store therethrough, cutting means for cutting the fibrous material arranged so as to close off the opening, cutting means being mounted so as to be able to move towards or away from the opening.

Preferably the cutting means is pivotally mounted relative to the opening so as to enable pivotal movement towards or away from the opening.

An emergency stop means may be provided to stop the operation of the spreader if the cutting means is moved away from the opening. Stop means may include a switch which is actuated by the movement of the cutting means away from the opening in the store, actuation of the switch effecting an emergency stop of the spreader.

Constitutory clauses set out in relation to the first and second aspects of the invention apply equally to the third aspect of the invention.

The cutting means is preferably resiliently biased against the opening. The rating of resilient bias is preferably chosen such that the force of normal material to be spread against the cutting means will tend not to move the cutting means away from the opening while the force of foreign objects which are not cut and then spread, such as large pieces of metal, concrete etc causes the cutting means to move away from the opening.

A screen may be provided between the material in the store and the cutting means, the screen being removable.

In that way, the cutting means can be actuated with a lower initial input of energy than would be the case if material to be cut were pressed right up against it. As the cutting means gets up to speed the screen can be gradually withdrawn such that material to be spread is allowed to reach the cutting means for cutting and subsequent spreading.

The screen preferably comprises a guillotine-type door most preferably a hydraulically actuated guillotine-type door.

Normally, the store comprises a container on a wheeled trailer which is trailed behind a tractor. In such a case, the opening of the store is generally arranged towards the rear of the store and spread material is spread in a fan from the rear of the store. In an alternative embodiment, the cutting means and separate spreading means may be arranged on a side of the container.

A material spreader in accordance with the above aspects of the invention will now be described in detail by way of example and with reference to the accompanying drawings, in which:-
FIG.1 is a schematic side view of a spreader in accordance with the invention;

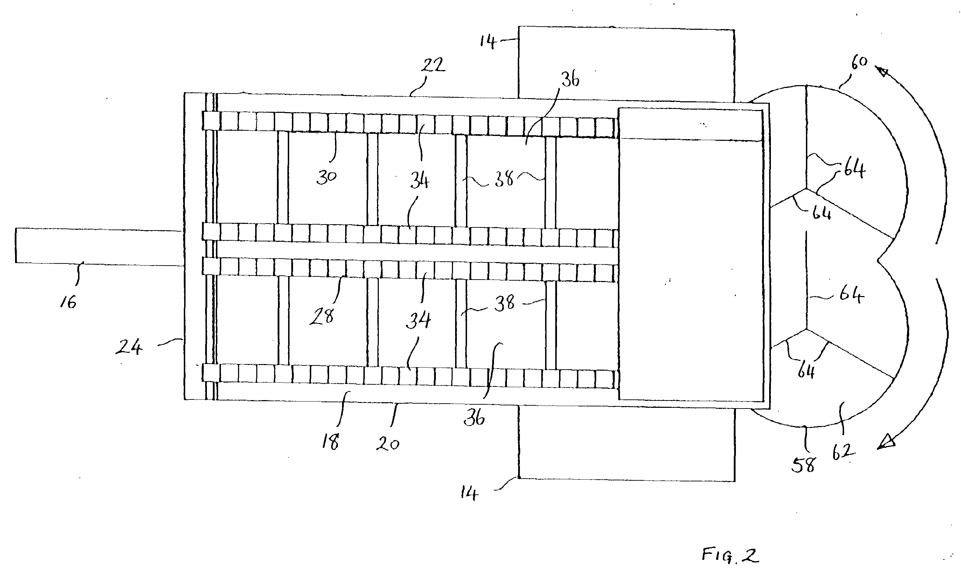

FIG.2 is a plan view of the spreader of FIG.1; and

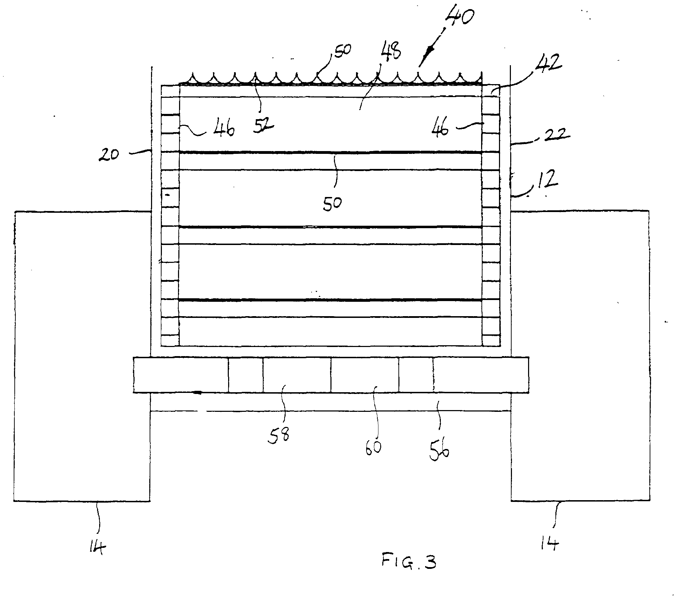

FIG.3 is an end elevation of the spreader of FIG.1 looking in the direction of arrow III in FIG.1.

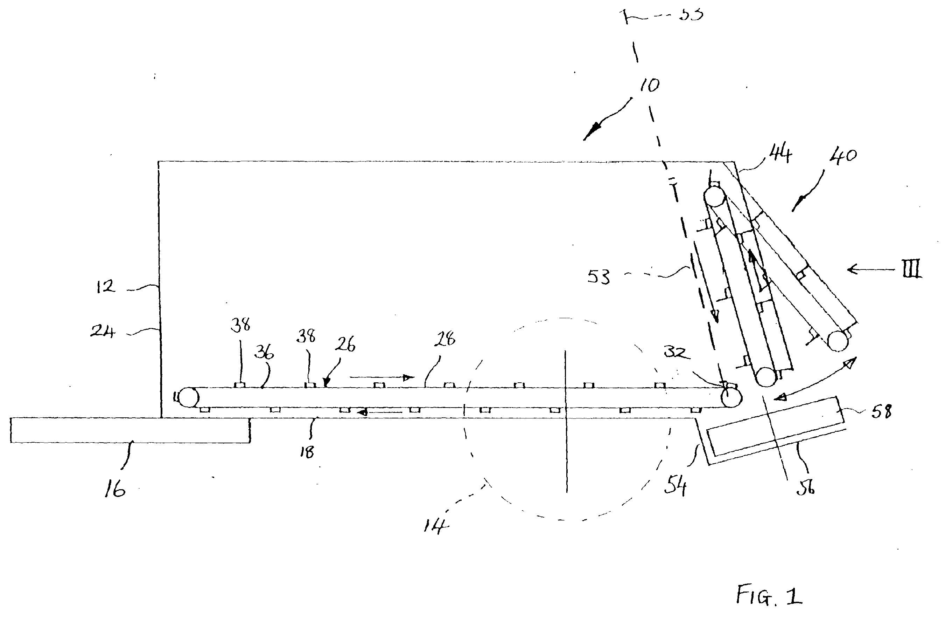

A material spreader in accordance with the invention is generally indicated at 10. The spreader 10 comprises a container 12 carried by a chassis (not shown). The chassis is borne on wheels 14 (shown in phantom in FIG.1) and is equipped with a hitch 16 to allow the spreader to be hitched to, for example, a tractor. The container 12 comprises a base 18, side walls 20, 22 and a front wall 24. The top and rear of the container 12 are open.

A conveyor assembly 26 is arranged on the base 18 of the container 12. The conveyor assembly 26 comprises two conveyor gangs 28, 30 which are arranged longitudinally of the container 12 so as to convey material from the front of the container 12 to the rear thereof. The two conveyor gangs 28, 30 are driven by a common drive shaft 32 adjacent the front wall 24 of the container 12. Each gang 28, 30 extends from adjacent the rear of the container 12 to the rear of the container 12.

Each conveyor gang 28, 30 comprises two chain-drive belts 34 which are spaced apart. A flexible web 36 is carried between the belts 34 and projecting rib members 38 are arranged between the belts 34 spaced longitudinally of the gang 28 at regular intervals.

A second conveyor assembly 40 is arranged at the rear of the container 12.

The conveyor assembly 40 comprises a single conveyor gang 42 extending across the width of the container 12. The conveyor gang 42 is arranged transverse to the conveyor assembly 26.

The conveyor gang 42 is mounted to a rear wall member 44 of the container 12. The rear wall member 44 is hinged at an upper part thereof to the side walls 20, 22 of the container 12. The wall 44 and conveyor gang 42 are mounted at 75° relative to the conveyor gang 26. Thus, in normal conditions the wall 44 and conveyor gang 42 lie at 15° from the vertical.

The wall 44 is spring loaded so as to be urged into a closed position. When in the closed position, the rearmost parts of conveyor gang 28 and 30 and the bottom most part of conveyor gang 42 are adjacent each other with a small gap therebetween.

The conveyor gang 42 comprises chain-drive belts 46 with a flexible web 48 arranged therebetween. Cutting blades 50 extend between the chain-drive belts 46 at regular spaced intervals. Each cutting blades 50 comprises a series of teeth 52 extending across the width of the conveyor gang 42. The spacing between the blade 50 on the conveyor 42 is the same as the spacing between the ribs 38 on the conveyors 28, 30. The conveyors 28, 30 and 42 are arranged so that the blades 50 co-operate with the ribs 38 to cut material so that the blades 50 almost contact the ribs 38 at the bottom of the conveyor 42.

A hydraulically actuated guillotine door 53 is provided within the container adjacent and inboard of conveyor gang 42. The door 53 is substantially parallel to the conveyor 42. The door 53 is shown in broken lines and can be moved upwardly out of the container to allow the bulk material to be spread to move towards the conveyor gang 42. The door 53 is normally arranged in the lower position shown in FIG.1. When spreading commences, the conveyor gang 42 begins to operate and the door 53 is gradually raised. Consequently, since the door 53 holds back the bulk material, the power required to start up the conveyor 42 is reduced and by the time the bulk material arrives at the conveyor 42, the conveyor 42 is already running at or around full speed.

The base 18 of the container 12 has a step 54 at the rear end thereof. Projecting from the bottom edge of the step 54 is a rotor surface 56. The rotor support surface 56 extends across the width of the spreader 10. The rotor support surface 56 supports two spreading rotors 58, 60. Each rotor 58, 60 comprises a circular base 62 carried by a drive shaft (not shown). Each rotor 58, 60 includes three radial vanes 64 which are regularly spaced at 120° about the centre of the circular bay 62. The rotors 58 and 60 are arranged such that the vanes on the rotor 58 extend into the gap between the vanes on the rotor 60. In particular, as shown in FIG.1, the rotors 58, 60 are arranged such that the vanes 64 on the rotors 58 extend between two vanes 64 on the rotor 60 so as to bisect the angle between the vanes 64 on the rotor 60.

A shroud is provided around each rotor and is arranged to extend partially around each rotor so as to prevent material landing on the rotors 58, 60 from being propelled forwardly of the spreader to foul the spreader 10.

In use, material to be spread is deposited in the container 12. An appropriate material would be manure with a high straw content. The conveyor gangs 28, 30 are driven by the drive shaft 32 so as to urge the bulk material rearwardly of the container 12. When the operator is ready to begin spreading the conveyor gang 42 at the rear of the container 12 is activated, as are the rotors 58, 60.

As shown in FIG.1, the blades 50 on the conveyor 42 cut material travelling along conveyors 28 and 30 and deposit the cut material onto the rotors 58, 60. The rotors 58, 60 are rotating at high speed and the vanes 64 on the rotors 58, 60 propel the material cut from the bulk material rearwardly of the spreader 10.

The wall 44 is provided with a switching arrangement (not shown). In the event that a foreign object is concealed within the bulk material to be spread which would have damaged previous spreaders, the wall 44 and conveyor gang 42 would be pushed rearwardly of the container 12 by the foreign object as the bulk material is urged rearwardly of the container 12 by the conveyor gangs 28 and 30. The wall 44, being hinged at an upper part thereof will pivot rearwardly of the container 12 as shown in FIG.1. The rearward pivoting of the wall 44 as shown in FIG.1 will actuate the switch assembly. The switch assembly is connected to an emergency stop mechanism which will stop the conveyors 28, 30 and 42 and the rotors 58 and 60. The wall 44 can then be pivoted so as to be fully opened and the foreign object can be cleared from the machine. When the door is returned to its normal position a safety latch can be actuated to allow the machine to recommence operation.

The angled inclination of the conveyor 42 aids in the rearward feeding of the material to be spread from the container 12. The 15° angle of incidence of the rotors 58, 60 causes material spread by the rotors to be directed with a partial upward component of movement which increases the range that the spread of material has thrown and therefore the area that the spreader will cover.

## Claims

1. A material spreader comprising a store for material to be spread, cutting means for cutting portions of material comprising a conveyor carrying cutting elements and separate spreading means for spreading the cut portions of material.

2. A material spreader according to claim 1 in which the spreader comprises urging means for urging the material in the store towards the cutting means.

3. A material spreader according to claim 2 in which the urging means comprises a conveyor for conveying the material in the store towards the cutting means.

4. A material spreader according to claim 2 or 3 in which the cutting means comprises a second conveyor carrying cutting elements, the second conveyor being arranged transverse relative to the first conveyor.

5. A material spreader comprising a store for material to be spread, cutting means for cutting portions of the material, a first conveyor for conveying the material in the store towards the cutting means, the cutting means comprising a second conveyor carrying cutting elements, the second conveyor being arranged transverse relative to the first conveyor.

6. A material spreader according to claim 4 or 5 in which the first and second conveyors are arranged so as to delimit an acute angle therebetween.

7. A material spreader according to claim 6 in which the angle between the first and second conveyors is approximately 75°.

8. A material spreader according to claim 5 in which the spreader includes separate spreading means for spreading the cut fibrous material.

9. A material spreader according to any of claims 1 to 4 and 8 in which the spreading means comprises two rotors which are driveable in rotation, the rotors having radial vanes to propel cut material dropped onto the respective rotor.

10. A material spreader according to claim 9 in which the rotors are rotatable about spaced parallel axes.

11. A material spreader according to claim 10 in which the axes lie approximately parallel with the aforesaid second conveyor.

12. A material spreader according to claim 4 or 5 in which the first conveyor is arranged along the floor of the store.

13. A material spreader according to claim 12 and where the rotors are rotatable about spaced parallel axes, the axes of the rotors of the spreader and the conveyor on the floor of the store delimiting an angle of 75°.

14. A material spreader according to any preceding claim in which the cutting means is mounted so as to be moveable towards and away from the opening from which material to be spread emerges.

15. A material spreader comprising a store for material to be spread, the store having an opening to allow material from the store therethrough, cutting means for cutting the fibrous material arranged so as to close off the opening, cutting means being mounted so as to be able to move towards or away from the opening.

16. A material spreader according to claim 14 or 15 in which the cutting means is pivotally mounted relative to the opening so as to enable pivotal movement towards or away from the opening.

17. A material spreader according to claim 14, 15 or 16 in which an emergency stop means is provided to stop the operation of the spreader if the cutting means is moved away from the opening.

18. A material spreader according to claim 17 in which stop means includes a switch which is actuated by the movement of the cutting means away from the opening in the store, actuation of the switch effecting an emergency stop of the spreader.

19. A material spreader according to claim 14 or 15 in which the cutting means is resiliently biased against the opening.

20. A material spreader according to claim 14 or 15 in which a screen is provided between the material in the store and the cutting means, the screen being removable.

21. A material spreader according to claim 20 in which the screen comprises a guillo-type door most preferably a hydraulically actuated guillotine-type door.

22. A material spreader according to any preceding claim in which the store comprises a container on a wheeled trailer which is trailed behind a tractor, the opening of the store being generally arranged towards the rear of the store and spread material being spread in a fan from the rear of the store.

23. A material spreader according to any of claims 1-21 in which the cutting means and separate spreading means are arranged on a side of the container.
